# EUROPEAN PATENT SPECIFICATION

(11) **EP 4 068 980 B1**
(45) Date of publication and mention of the grant of the patent: **16.10.2024**
(21) Application number: 20815861.8
(22) Date of filing: 03.12.2020
(51) Int. Cl.: A23G 9/28, A23G 9/22, G07F 13/06, G07F 13/10, G07F 17/00

(54) **MACHINE FOR MAKING FROZEN CONFECTIONARY PRODUCT IN RE-USEABLE PRODUCT TUBES**
MASCHINE ZUR HERSTELLUNG VON GEFRORENEM KONFEKTPRODUKT IN WIEDERVERWENDBAREN PRODUKTROHREN
MACHINE DE FABRICATION DE PRODUITS DE CONFISERIE CONGELÉS PRÉSENTÉS DANS DES TUBES RÉUTILISABLES

(30) Priority: 06.12.2019 EP 19214256
(43) Date of publication of application: 12.10.2022
(73) Proprietor: Société des Produits Nestlé S.A., 1800 Vevey (CH)
(72) Inventor: KRAPPEN, Edgar Heinrich, 1712 TAFERS (CH)
(74) Representative: Slaven, John William
(86) International application number: PCT/EP2020/084356
(87) International publication number: WO 2021/110788

(56) References cited:
- EP-A1- 0 995 685
- EP-B1- 0 995 685
- WO-A1-2014/184579
- WO-A2-2004/103831
- WO-A2-2004/107873
- WO-A2-2012/007770
- GB-A- 2 230 057
- GB-A- 502 552
- US-A- 1 642 200
- US-A- 2 148 451
- US-A- 2 495 077
- US-A- 2 555 984
- US-A- 3 876 110
- US-A- 4 420 948
- US-A- 5 405 054
- US-A1- 2009 224 419

## Description

### Field of the invention

The present disclosure generally relates to frozen food compositions such as frozen confectionary products. More particular, the present invention relates to a dispensing machine for dispensing frozen confectionary product.

### Background

Dispensing of frozen confectionary products is typically done by an operator working at a counter, truck, or kiosk. However, the speed at which a consumer is able to receive a frozen confectionary product is greatly limited by the speed at which the operator is able to prepare the frozen confectionary product. Moreover, when the frozen confectionary product comprises multiple flavors, sauces, and/or toppings, the time to dispense the frozen confectionary product increases.

Additionally, dispensing of frozen confectionary products generates a great deal of waste. For example, each frozen confectionary flavor, sauce and/or topping is stored in a separate container prior to being dispensed to a consumer. Moreover, the containers holding the frozen confectionary product dispensed to the consumers and the spoons used in frozen confectionary products can all generate waste.

Vending machines with frozen wrapped or packed frozen confectionary products exist. The wrapping and packaging material is disposed as waste when the product is consumed.

WO 2014/184579 discloses a container for product to be dispensed, the container having an upper part intended to move or deform in order to reduce the volume within the container, the container having an outlet intended to open during movement or deformation of said upper part.

US 5 405 054 discloses a frozen confection-dispensing apparatus comprising: containing means for containing a frozen confection in a closed chamber, means for holding the containing means in a receptacle, an elongated sleeve including a longitudinally extending channel, the containing means being disposed in the longitudinally extending channel, the elongated sleeve and the containing means cooperating to provide a bag assembly disposed in the receptacle.

WO 2004/103831 discloses a dispenser for dispensing frozen food products from multiple cartridges, said dispenser comprising: a housing to which a dispensing assembly adapted for pushing the food product from a single cartridge is attached, and storage means for a plurality of cartridges of frozen food product.

WO 2012/007770 discloses a dispensing apparatus for dispensing frozen or semi-frozen product such as ice cream and sorbet or the like, the dispensing apparatus comprising a bulk container for storing multiple portions of product to be dispensed.

GB 2 230 057 discloses a dispensing apparatus for dispensing a frozen product comprising a cylindrical compartment, refrigeration means for maintaining the compartment and the product at a selected low temperature, and deformable container means arranged to be prefilled with product and located releasably within the compartment.

WO 2004/107873 discloses an apparatus for automatic delivering of paste food products, particularly ice cream and/or yoghurt, comprising a housing, within which a plurality of containers of said paste food products are provided.

GB 502 552 discloses a coin-actuated vending machine for ice cream or the like, characterized by the feature that the unlocking mechanism and the coin mechanism are located entirely outside the refrigerating chamber and the storage chamber, and that they are thermally insulated from these chambers and also from the locking means.

US 4 420 948 discloses an apparatus for dispensing a semisolid substance in scoops having a generally spherical shape and a uniform consistency, said apparatus comprising: a closed container, pressure means, exit means, and scoop dispensing means.

EP 0 995 685 discloses dispensing system for frozen desserts, said dispensing system including a plurality of containers and a dispensing device, each container containing an individual portion of frozen dessert.

US 2 148 451 discloses a means for dispensing frozen material such as ice cream comprising a refrigerator having a discharge opening in one wall thereof and a door covered opening in said wall, and a movable member in the refrigerator for receiving sleeves containing the material.

There is a need to reduce waste of packaging material in order to preserve the environment.

There is also a need for sustainable vending solutions for frozen products such as frozen confectionary.

### Object of the invention

It is the object of present invention to provide a sustainable dispensing machine, which provides a solution to one or more or all of the above-mentioned needs.

### Summary of the invention

The present invention provides the improvement by a dispensing machine, which can dispense product from re-usable tubes. The dispensing machine design allows products to be prepared from multiple frozen confectionary flavours and topping and/or sauces. The dispensing machine removes the need for wrapping of the product and thus provides zero waste of packaging material.

The present invention relates to a dispensing machine for dispensing a frozen confectionary product, the machine comprising:
a first storage area for storing a first storage tray with one or more first tubes in the dispensing machine,
a serving station for receiving one or more first tubes comprising a composition that is a frozen confectionary from the first storage tray, the serving station comprises
   a first position under the one or more first tubes for receiving a container, a means for extruding the frozen confectionary out of the tubes located in the serving station,
   a cutting device for cutting at least a portion of the frozen confectionary into the container, and
means for transferring the one or more first tubes in the first storage area to the serving station and from the serving station to a storage area, and wherein the one or more first tubes are reusable; and
at least two zones, the at least two zones comprising a first zone wherein the temperature is lower than the temperature in the second zone, and wherein the first storage area is located in the first zone and the serving station is located in the second zone
wherein the means for transferring the one or more first tubes is a robotic arm, preferably a robotic arm comprising a tube changer plate configured to grip the one or more first tubes. This has the benefit that the dispensing machine can run without an operator. It also allows a fast and consistent preparation of the product. Finally, the use of one or more robotic arms allows for a compact design of the dispensing machine.

By means of the dispensing machine according to the present invention, the consumer can receive a customizable frozen confectionary product from an automated dispensing machine.

In the dispensing machine according to the invention, one or more tubes containing a frozen confectionary or a component of a frozen confectionary, can be placed on a storage tray and transferred from a production facility to a dispensing machine. The tubes can be placed directly in the dispensing machine without the need to transfer the tubes off the storage tray or the contents of the tubes (i.e., the frozen confectionary or a component of a frozen confectionary) out of the tubes.

The frozen confectionary and/or component thereof provides a consumer with a customizable frozen confectionary product.

In an embodiment of the invention the dispensing machine can also identify when a tube is below a pre-determined threshold and then send the tube to a second location (i.e., the production facility or an intermediate location) to be subsequently cleaned and reused.

For example, a tube can be filled with a frozen confectionary at a production facility and placed on a tray. The tray can be shipped to a dispensing machine and placed in the dispensing machine to provide a consumer with a customizable frozen confectionary product. After the tube is used, the tube can be collected, washed and reused (e.g., re-filled with another frozen confectionary product). Preferably, the tubes can be washed at a production facility and then delivered to a production line located in the facility to be re-filled. Preferably, the refilled frozen confectionary tubes can be placed on a tray to be shipped back to the dispensing machine in, for example, a refrigerated shipping box.

In a preferred embodiment, the means for transferring the one or more first tubes in the first storage area to the serving station and from the serving station back to the first storage area. This allows for a compact layout of the dispensing machine. In this embodiment, the first tubes are returned back in the first tube trays and there is no need for additional storage space is needed. Once the first trays are filled empty first tubes then tray can be removed from the dispensing machine, and the tubes washed and reused.

### Brief Description of the Drawings

In the drawings which illustrate example embodiments of this invention:
**FIG. 1** is a view of a frozen confectionary tube that may be used in a dispensing machine according to the invention.
**FIG. 2** is a front view of a dispensing machine that may be used in a dispensing machine according to the invention.
**FIG. 3** is a view of a topping tube that may be used to dispense the frozen confectionary product in a dispensing machine according to the invention.
**FIG. 4** is a view of a sauce tube that may be used in a dispensing machine according to the invention.
**FIG. 5** is a view of a frozen confectionary tube that may be used in a dispensing machine according to the invention.
**FIG. 6** is a top view of a storage tray that may be used to transport the tubes to be used in an embodiment of the dispensing machine according to the invention.
**FIG. 7** is a side view of a storage tray that may be used in a dispensing machine according to the invention.

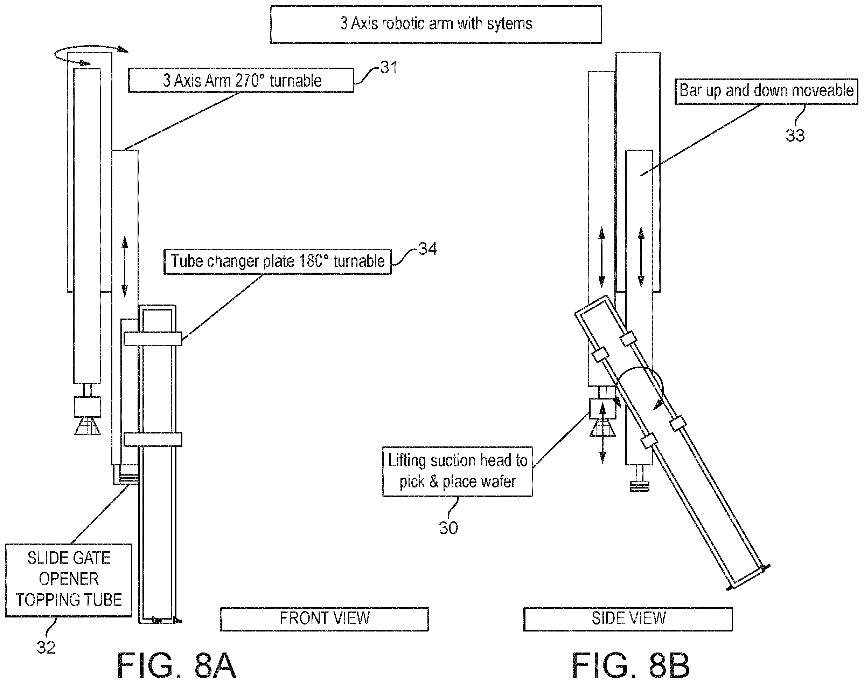

**FIG. 8A** is a front view of an arm that may be used in a dispensing machine according to the invention.
**FIG. 8B** is a side view of an arm that may be used in a dispensing machine according to the invention.
**FIG. 9** is a view of a tube holder that may be used to dispense the frozen confectionary in a dispensing machine according to the invention.
**FIG. 10** is a view of a rotating table and cutting unit that may be used to dispense the frozen confectionary product in a dispensing machine according to the invention.
**FIG. 11** is a view of a rotating table and cutting unit that may be used to dispense the frozen confectionary product in a dispensing machine according to the invention.
**FIG. 12** is a view of a buffer unit that may be used to dispense the frozen confectionary product in a dispensing machine according to the invention.
**FIG. 13** is a schematic view of a dispensing machine that may be used to perform an embodiment of the methods disclosed herein.
**FIG. 14** is a flowchart showing a non-limiting example of a method of making use of a dispensing machine according to the invention herein.
**FIG. 15** is a flowchart showing a non-limiting example of a method of making use of a dispensing machine according to the invention herein.
**FIG. 16A** is a top view of a dispensing machine according to the invention.
**FIG. 16B** is a top view of a dispensing machine according to the invention with temperature zones indicated.

### Detailed description of the invention

With the dispenser according to the invention, it is possible to re-use one of more tubes. For example, the frozen confectionary composition made at the factory can be provided in the tubes.

The dispensing device allows the loading of one or more first tubes comprising a composition that is a frozen confectionary or a component of a frozen confectionary from a first storage tray located in a first storage area to a serving station; dispensing at least a portion of the composition that is a frozen confectionary or a component of a frozen confectionary from at least one of the one or more first tubes into a container; optionally placing a spoon into the container; and conveying the frozen confectionary product to an outlet. Preferably the first storage area, the serving station, and the outlet are located at the same venue.

In a preferred embodiment of the machine it comprises a second storage area separate from the first storage area for storing a second storage tray comprising one or more second tubes comprising an additional component, means for transferring the one or more second tubes from the second storage area to the serving station, and wherein the serving station comprises a second position under the one or more of the second tubes for receiving a container. The second storage area may comprise toppings or sauce, which allows the multiple variations of the decorations of the frozen confectionary that can be added to the product.

The confectionary component may comprise a frozen confectionary sauce, for example, a syrup or a hot fudge. In an embodiment, the additional confectionary component may comprise a frozen confectionary topping, for example, nuts, candies, fruit or sprinkles. These components may be provided in the second tube or tubes.

A dispensing machine preferably comprises a third zone wherein the second storage area is positioned, and wherein the temperature of the third zone is higher than the temperature of the first zone.

The temperature of the first zone is preferably -20 to -16°C, the temperature of the second zone is preferably -10 to -6°C, and the temperature of the third zone is preferably ambient temperature, e.g. from 6°C to 8°C.

To automate the preparation of the frozen confectionary product, the dispensing machine may comprises means for conveying the frozen confectionary product to an outlet on the dispensing machine.

Preferably the machine comprises heaters for heating the one or more second tubes in the serving station prior to dispensing the portion of the component of the frozen confectionary into the container. This allows product to be created with both hot and cold elements.

To facilitate the running of the dispensing machine it comprises means for detecting when contents of one of the one or more first tubes is below a pre-determined threshold, and means for moving the one of the one or more first tubes having contents below the pre-determined threshold into an empty tube location in a tray located in the dispensing machine.

For example, when detecting that the contents of a tube are below a pre-determined threshold; transferring the substantially emptied tube to an empty tube tray located in the dispensing machine; shipping the emptied tube tray to a location different from the dispensing machine (e.g., the production facility or an intermediate location); cleaning the emptied tubes at the location different from the dispensing machine; transferring the cleaned tubes to a production line (e.g., the production facility); and filling the cleaned tubes with a frozen confectionary or a component of a frozen confectionary.

When the dispensing machine is in the form of a vending machine the machine may advantageously comprise a user interface for receiving an indication of a type of frozen confectionary product to be dispensed.

To facilitate the handling of the tubes in the dispensing machine the tube may comprise a first flap located on a first end of the tube and a second locking flap located on a second end of the tube.

Furthermore, the tube comprises a sealing cap, preferably a sealing cap configured to be pushed into the tube may be used.

The dispensing machine preferably comprises a door for receiving and removing trays with tubes. The position of the tubes in the trays facilitates the filling and replacement of the tubes in the storage areas.

In one embodiment the machine according to the invention may comprise a buffer unit located in the dispensing machine prior to conveying the frozen confectionary product to the outlet.

To ease the position of the frozen confectionary portions cut from the tubes, the dispensing machine may comprise a rotating table located in the dispensing machine on which the containers can be placed. Preferably, the tubes have an inner profile having a shape selected from the group consisting of a disc, a star, a hexagon, a square or a polygon. This allows a variation of the shape of the portions of the frozen confectionary.

It should be appreciated that various embodiments of the present disclosure can be combined with other embodiments of the disclosure and are merely illustrative of specific ways to make and use the disclosure and do not limit the scope of the disclosure when taken into consideration with the claims and the following detailed description. As used in this disclosure and the appended claims, the singular forms "a," "an" and "the" include plural referents unless the context clearly dictates otherwise. Thus, for example, reference to "an ingredient" or "the ingredient" includes two or more ingredients.

The words "comprise," "comprises" and "comprising" are to be interpreted inclusively rather than exclusively. Likewise, the terms "include," "including" and "or" should all be construed to be inclusive, unless such a construction is clearly prohibited from the context. Nevertheless, the compositions disclosed herein may lack any element that is not specifically disclosed herein. Thus, a disclosure of an embodiment using the term "comprising" includes a disclosure of embodiments "consisting essentially of" and "consisting of" the components identified.

The term "and/or" used in the context of "X and/or Y" should be interpreted as "X," or "Y," or "X and Y." Similarly, "at least one of X or Y" means "X" or "Y," or "X and Y." Where used herein, the terms "example" and "such as," particularly when followed by a listing of terms, are merely exemplary and illustrative and should not be deemed to be exclusive or comprehensive.

As used herein, "about," "approximately" and "substantially" are understood to refer to numbers in a range of numerals, for example the range of -10% to +10% of the referenced number, preferably -5% to +5% of the referenced number, more preferably - 1% to +1% of the referenced number, most preferably -0.1% to +0.1% of the referenced number. All numerical ranges herein should be understood to include all integers, whole or fractions, within the range. Moreover, these numerical ranges should be construed as providing support for a claim directed to any number or subset of numbers in that range. For example, a disclosure of from 1 to 10 should be construed as supporting a range of from 1 to 8, from 3 to 7, from 1 to 9, from 3.6 to 4.6, from 3.5 to 9.9, and so forth.

The term "frozen confectionary" refers to any frozen or chilled confection. Non-limiting examples are ice cream, sorbet, sherbet, water ice, frozen yogurt, frozen dairy, soft ice, granitas, mellorine, frozen custard, non-dairy frozen confection, milk ice, ice lolly, gelato or frozen jelly, or chilled desserts such as mousses, whipped yogurt, milk shakes or smoothie or coffee latté.

The term "topping" refers to any topping for a frozen or chilled confection. Non-limiting examples are nuts, sprinkles, fruit, or candies.

The term "sauce" refers to any sauce for a frozen or chilled confection. Non-limiting examples include chocolate syrup, caramel, hot fudge, strawberry sauce, or other syrups.

The term "frozen confectionary component" refers to a topping and/or a sauce for a frozen confectionary.

The term "frozen confectionary product" refers to a frozen confectionary and any sauce and/or topping.

### FIG. 1

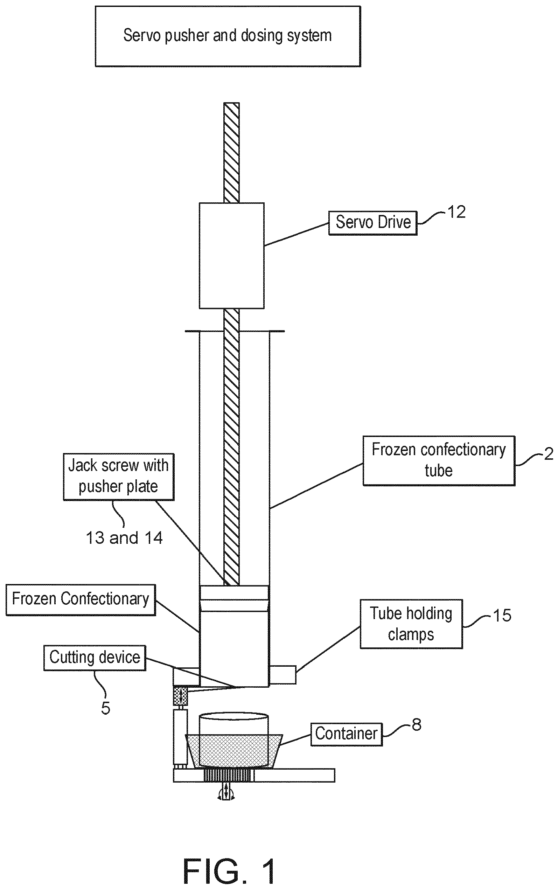

**FIG. 1** is a front view of a frozen confectionary tube 2 that may be used in the presently disclosed machine. The frozen confectionary tube 2 may have a circular cross-section, such as a circular opening of the tube and/or a circular bottom surface of the tube. However, the present disclosure is not limited to a specific shape of the tube and additional shapes such as a star, hexagon, square or polygon are contemplated. The frozen confectionary tube may be made of stainless steel, for example.

The frozen confectionary tube 2 may be held in a specific position and/or location by tube holding clamps 15. Preferably the tube holding clamps 15 are configured to prevent the frozen confectionary tube 2 from moving out of place when positioned in a dispensing machine 1 as described in greater detail hereafter.

In an embodiment, the frozen confectionary tube 2 may interact with a servo drive 12 which is preferably connected to a jack screw 13 and/or a pusher plate 14 to control the amount of the frozen confectionary dispensed from the frozen confectionary tube 2. For example, the servo drive 12 may drive the jack screw 13 and/or the pusher plate 14 to dispense a specified amount of frozen confectionary from the frozen confectionary tube 2. The servo drive 12 may be controlled by a controller 27. Preferably a cutting device 5 may be used to slice the frozen confectionary. For example, the cutting device 5 may comprise a slicer or a heated wire configured to cut the frozen confectionary. The frozen confectionary may be dispensed into a container 8.

### FIG. 2

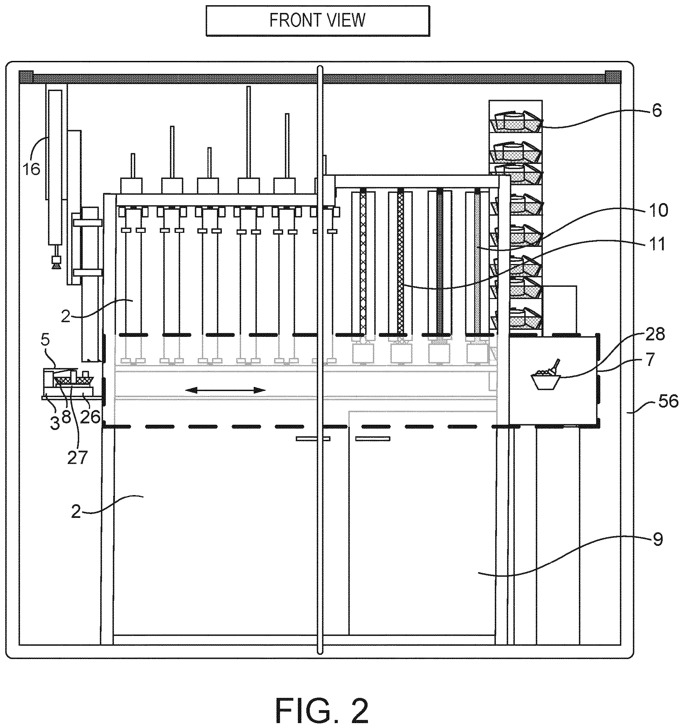

**FIG. 2** is a front view of an embodiment of the dispensing machine 1. The dispensing machine 1 may comprise one or more of the servo drive 12, the jack screw 13 or the pusher plate 14.

The dispensing machine 1 may be configured to automatically dispense a frozen confectionary product. For example, the dispensing machine 1 may comprise a rotating table 3 configured to hold and move the container 8 into a first position for receiving a first frozen confectionary from a first frozen confectionary tube 2. In an embodiment, after receiving a first frozen confectionary, the rotating table 3 may move the container 8 into a second position to receive a second frozen confectionary from a second frozen confectionary tube 2 and so forth. Preferably the rotating table 3 is configured to move sideways or front and back through the dispensing machine 1 to receive one or more frozen confectionaries and deliver a resultant frozen confectionary product 28 to an outlet 7 from which a consumer may remove the frozen confectionary product 28 from the dispensing machine 1 (i.e., the dispensing process).

Preferably the rotating table 3 moves through a visible area 26 that is visible to consumers outside the dispensing machine 1.

The dispensing machine 1 may comprise the outlet 7, which can convey the frozen confectionary product 28 to the consumer. The dispensing machine 1 may comprise a user interface 56. A consumer may enter information regarding a type and/or an amount of frozen confectionary into the user interface 56 (e.g., selected from options displayed by the user interface 56). The information may be conveyed to the controller 27 which can be at least partially located in the rotating table 3.

The dispensing machine 1 may comprise a buffer unit 6. The buffer unit 6 may receive the frozen confectionary product 28 from the rotating table 3. The buffer unit 6 may be used to store the frozen confectionary product 28 in the dispensing machine 1 after production from the corresponding frozen confectionary tube 2 and/or prior to conveying the frozen confectionary product 28 to the consumer. In an embodiment, the buffer unit 6 may remove a frozen confectionary product 28 from the outlet 7 that has not been picked up by a consumer within a pre-determined time.

Optionally the dispensing machine 1 may further comprise one or more topping tubes 10 and/or one or more sauce tubes 11. The rotating table 3 may be configured to move the container 8 into one or more further positions whereby the container 8 may receive toppings from the topping tubes 10 and/or sauces from the sauce tubes 11.

### FIG. 3

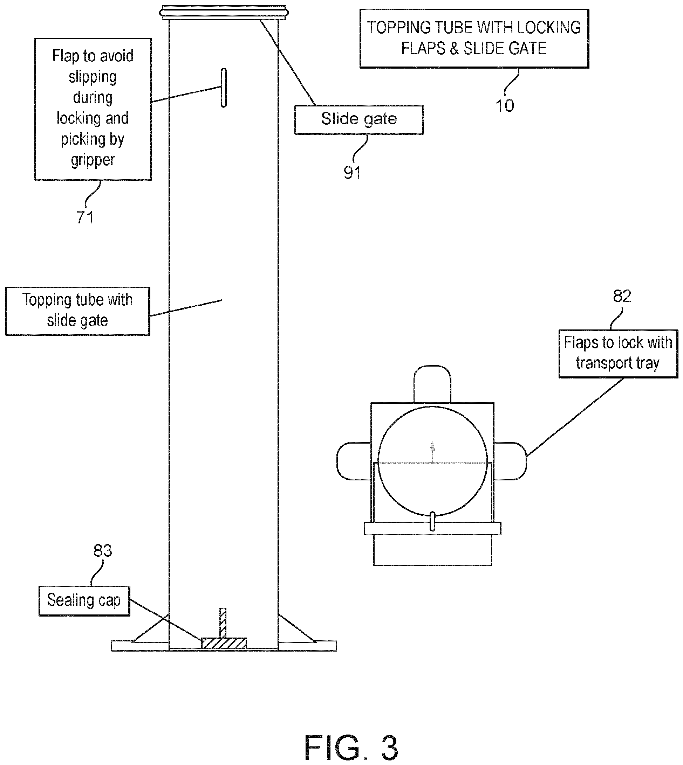

**FIG. 3** depicts an example of a topping tube 10 that may be used in an embodiment of the presently disclosed dispensing machine. The topping tube 10 may comprise a first flap 81 to prevent slipping when the topping tube 10 is moved as will be discussed later in greater detail. The topping tube 10 may further comprise a locking flap 82 to lock the topping tube into a storage tray 95 and/or the dispensing machine 1. The topping tube 10 may further comprise a slide gate 91 which may be removed to allow the topping tube 10 to be filled with toppings and/or to allow the topping tube 10 to dispense toppings into the container 8. The topping tube 10 may further comprise a sealing cap 83. The sealing cap 83 can keep the toppings in the topping tube 10.

### FIG. 4

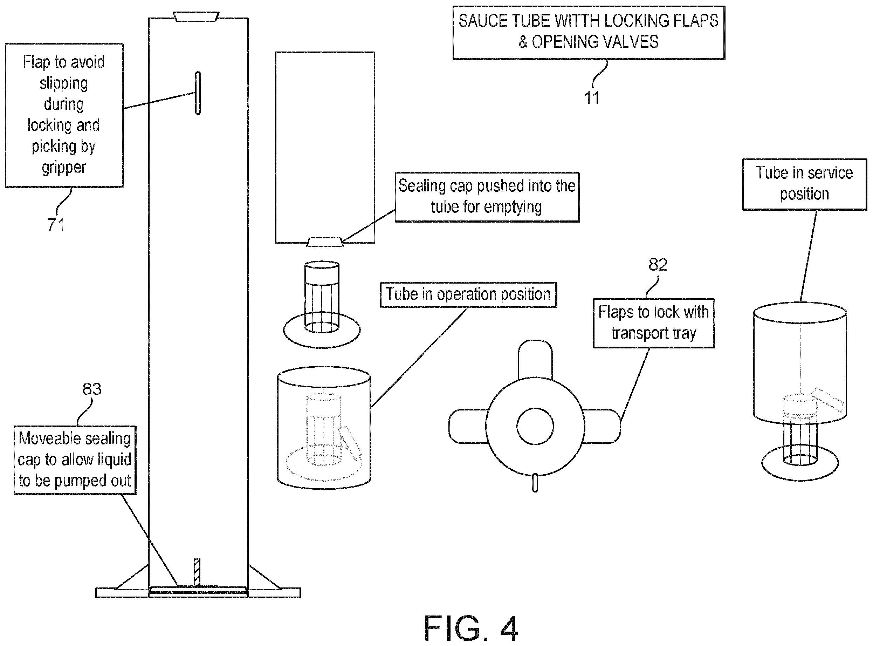

**FIG. 4** depicts an example of a sauce tube 11 for use in an embodiment of the presently disclosed dispensing machine. The sauce tube 11 may comprise a first flap 81 to prevent slipping when the sauce tube 11 is moved. The sauce tube 11 may further comprise a locking flap 82 to lock the sauce tube 11 into the storage tray 95 and/or the dispensing machine 1. The sauce tube 11 may further comprise a slide gate 91 which may be removed to allow the sauce tube 11 to be filled with sauce and/or to allow the sauce tube 11 to dispense sauce into the container 8. The sauce tube 11 may comprise a sealing cap 83. The sealing cap 83 may prevent the sauce from leaking out of the sauce tube 11.

### FIG. 5

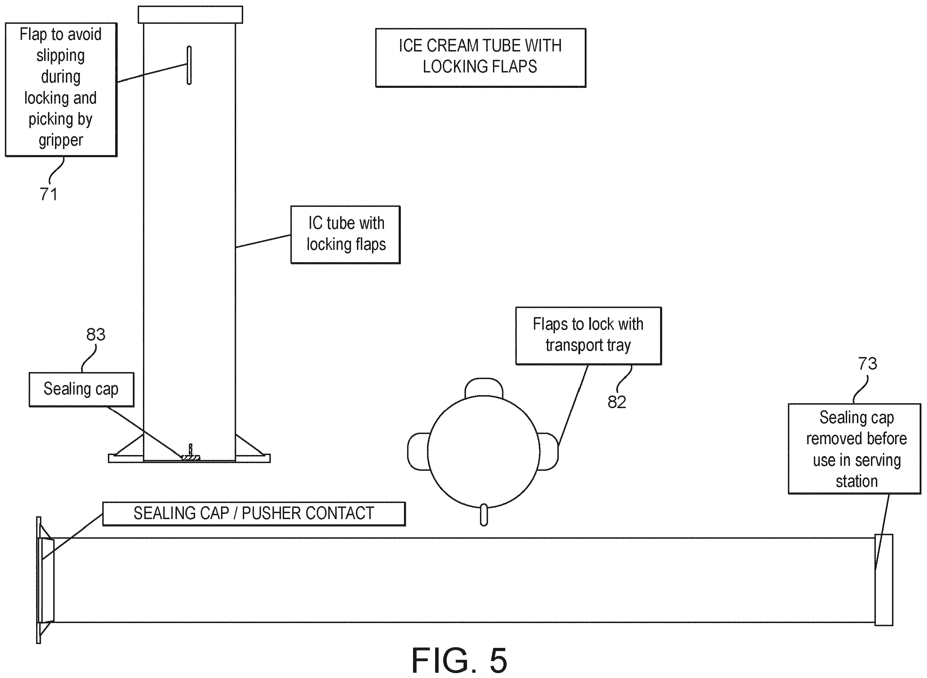

**FIG. 5** depicts an example of the frozen confectionary tube 2 for use in an embodiment of the presently disclosed dispensing machine. The frozen confectionary tube 2 may comprise a first flap 81 to prevent slipping when the frozen confectionary tube 2 is moved. The frozen confectionary tube 2 may further comprise a locking flap 82 to lock the frozen confectionary tube 2 into the storage tray 95 and/or the dispensing machine 1. The frozen confectionary tube 2 may further comprise a slide gate 91 which may be removed to allow the frozen confectionary tube 2 to be filled with frozen confectionary and/or to allow the frozen confectionary tube 2 to dispense frozen confectionary into the container 8. The frozen confectionary tube 2 may comprise a sealing cap 83. The sealing cap 83 may prevent the frozen confectionary from leaking out of the frozen confectionary tube 2. In an embodiment, the slide gate 91 and/or the sealing cap 83 may act as a contact point for the pusher plate 14.

### FIG 6; FIG 7

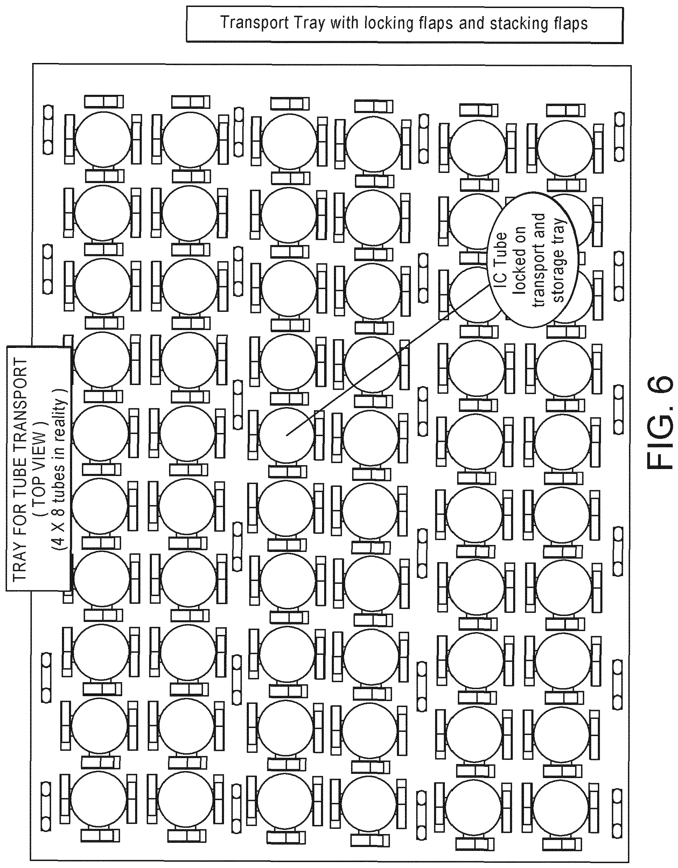

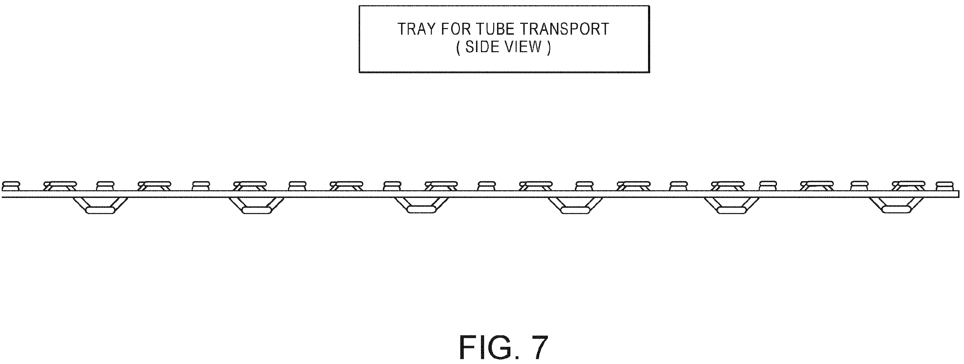

In a preferred embodiment, the storage tray 95 is a stainless steel tray. **FIG. 6** depicts a top view of an embodiment of the storage tray 95 which may be used to transport the tubes with the tube holding clamps 15. **FIG. 7** depicts a side view of an embodiment of the storage tray 95 for transport. The storage tray 95 may be configured to allow the frozen confectionary tubes 2, the topping tubes 10, and/or the sauce tubes 11 to be locked and unlocked by an arm 16 located in the dispensing machine 1. The storage tray 95 is preferably configured to be stacked on top of a second storage tray 95 for ease in transport.

In a preferred embodiment, the dispensing machine 1 may further comprise one or more arms 16 for moving the frozen confectionary tubes 2, the topping tubes 10, and/or the sauce tubes 11 from the storage tray 95 located in a storage area to a serving station as will be discussed in greater detail later.

### FIG. 9

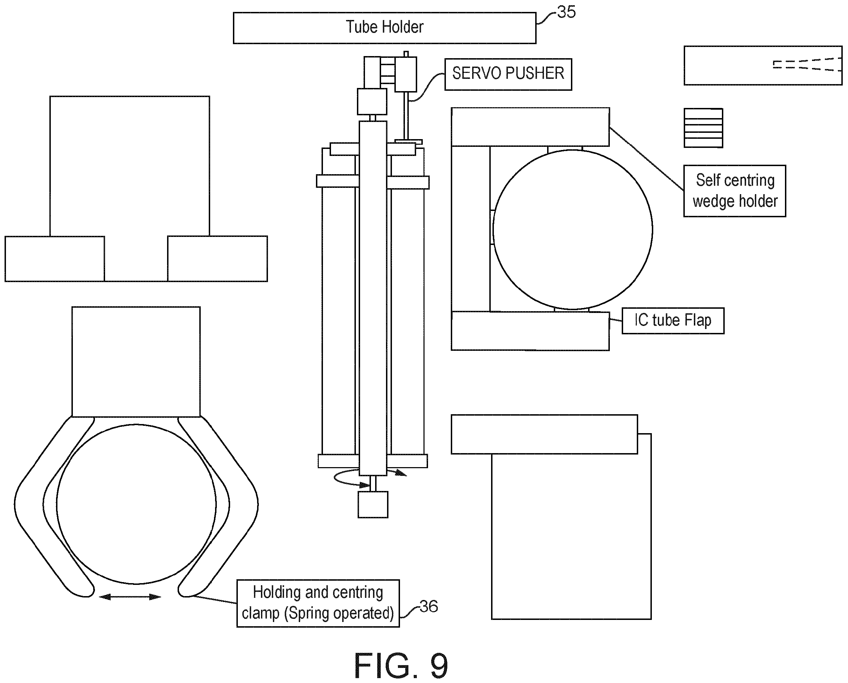

The dispensing machine 1 may further comprise a tube holder 35. **FIG. 9** shows the tube holder 35 which may be configured to hold the frozen confectionary tubes 2, the sauce tubes 11, and/or the topping tubes 10. For example, a spring operated holding clamp 36 may be used to hold the frozen confectionary tubes 2, the sauce tubes 11, and/or the topping tubes 10 in place during transferring of the frozen confectionary tubes 2, the topping tubes 10, and/or the sauce tubes 11 from the storage tray and during dispensing of the frozen confectionary components from the frozen confectionary tubes 2, the topping tubes 10, and/or the sauce tubes 11.

### FIG. 10; FIG. 11

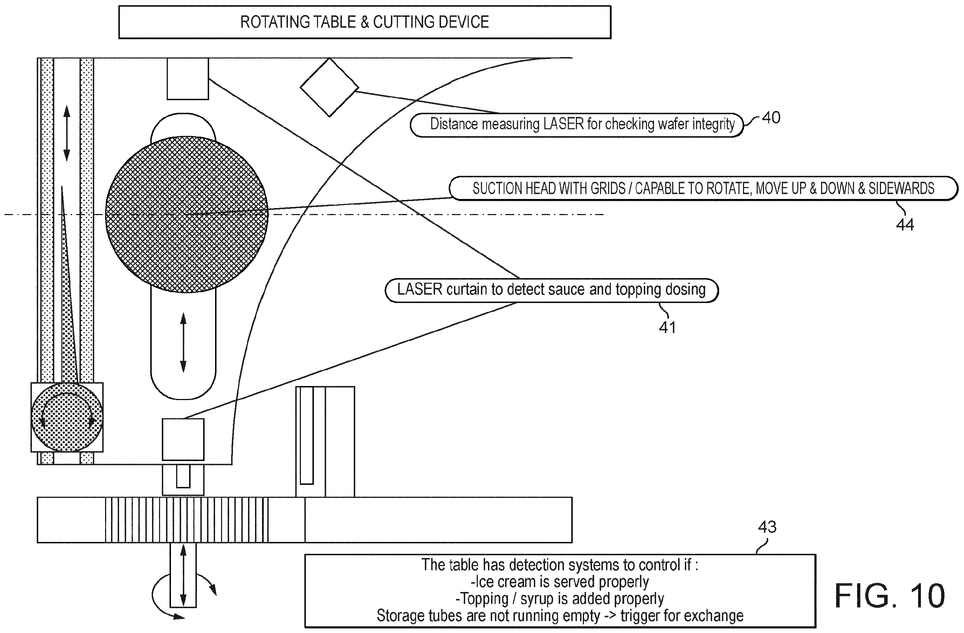

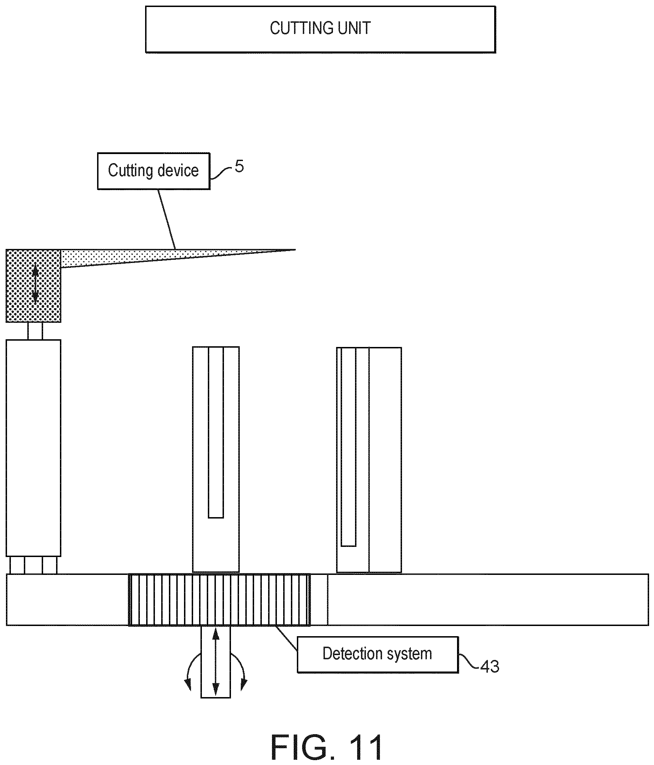

**FIG. 10** and **FIG. 11** depict an embodiment of the rotating table 3 and the cutting device 5 that may be used in an embodiment of the presently disclosed machine. The rotating table 3 may comprise a suction head 44 that may comprise grids configured to rotate, move up and down, and/or move sideways. The rotating table 3 may further comprise a detection system 43 to control the dispensing of the frozen confectionary product 28. The detection system 43 may comprise a distance measuring laser 40 and/or a laser curtain 41 to detect the amount of sauce and/or toppings dispensed into the container 8. The detection system 43 may further detect if the frozen confectionary tubes 2, the topping tubes 10, and/or the sauce tubes 11 are below a pre-determined threshold. For example, the detection system 43 may be configured to control the replacement of one or more of the frozen confectionary tubes 2, the topping tubes 10, and/or the sauce tubes 11 when the frozen confectionary tubes 2, the topping tubes 10, and/or the sauce tubes 11 reach a minimum pre-determined threshold of content as will be discussed in greater detail later.

In an embodiment, the outlet 7 may comprise a conveyor sling 55 configured to move sideways to transfer the frozen confectionary product 28 from the serving unit 50 into the buffer unit 6 or from the buffer unit 6 into the serving unit 50.

### FIG. 12

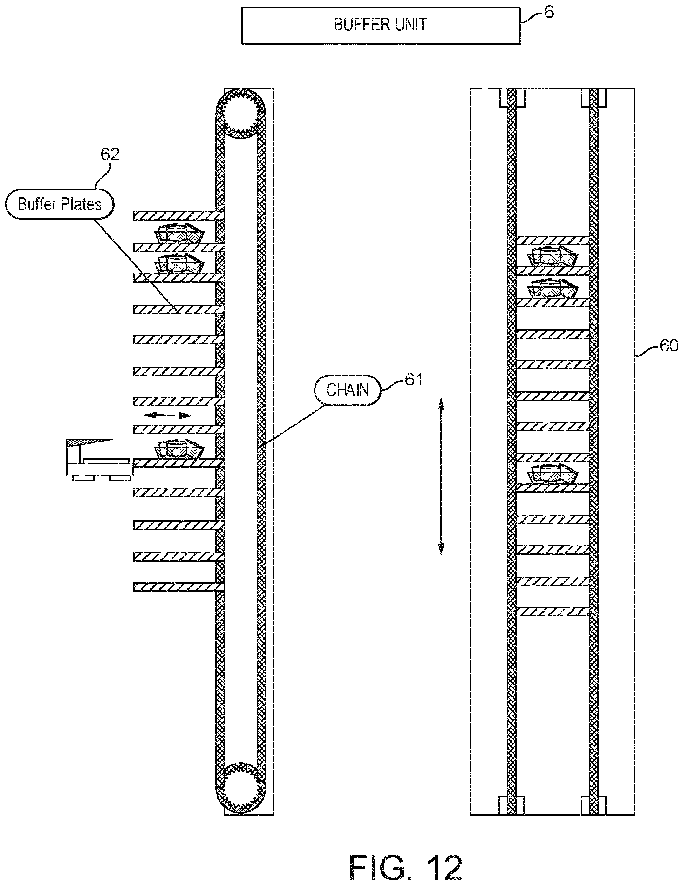

**FIG. 12** depicts an example of the buffer unit 6 that may be used in an embodiment of the presently disclosed machine. Preferably the buffer unit 6 may be provided to store and serve the frozen confectionary products 28. The buffer unit 6 may further transfer frozen confectionary products 28 that were not removed by a consumer from the outlet 7 in a pre-determined amount of time. The buffer unit 6 may comprise a chain 61 and/or one or more buffer plates 62. The frozen confectionary product may be loaded onto the one or more buffer plates 62 and/or moved up and down by the chain 61.

### FIG. 13

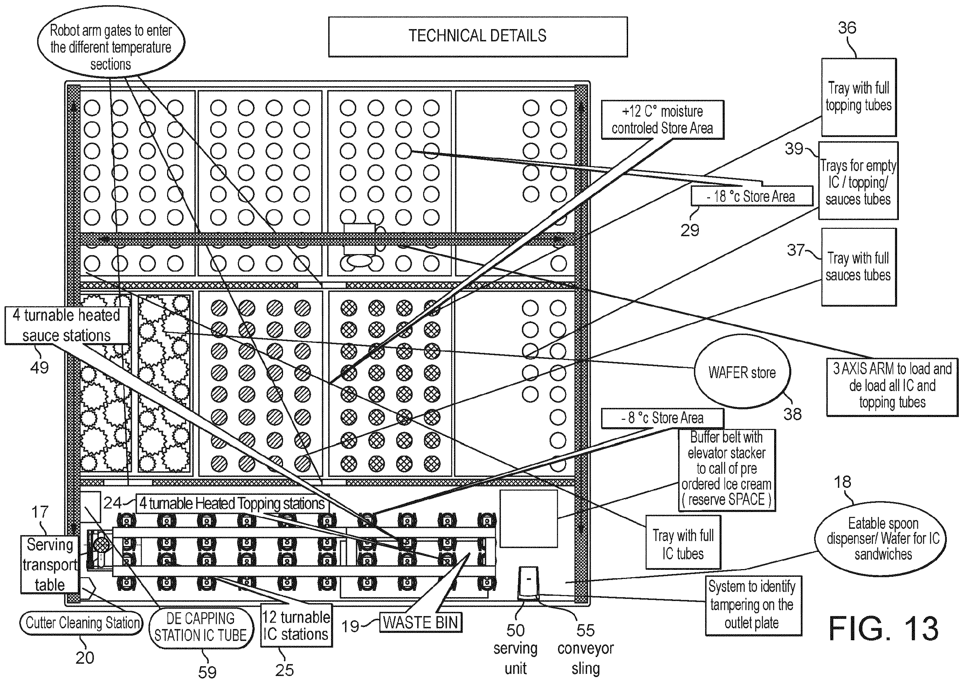

**FIG. 13** depicts an overview of the dispensing machine 1 according to the invention. Preferably the dispensing machine 1 can comprise at least three different temperature zones. Preferably the first zone may be kept at a temperature lower than the second and third zones. Preferably the second zone may be kept at a temperature lower than the third zone. For example, the first zone may be kept at a temperature of approximately - 12°C or less. The second zone may be kept at a temperature of approximately -10°C - 0°C. The third zone may be kept at a temperature of approximately 6°C - 12°C. Preferably the zones are moisture controlled.

Preferably the frozen confectionary tubes 2 may be stored in a frozen confectionary storage area 29 located in the first zone. Preferably the sauce tubes 11 and/or topping tubes 10 may be stored respectively in a sauce storage area 37 and a topping storage area 36 located in the third zone. Preferably a serving station 17 may be located in the second zone.

The serving station 17 may comprise a sealing cap removal station 59 to remove the sealing caps 83 from the frozen confectionary tubes 2, the sauce tubes 11, and/or the topping tubes 10 to allow the contents of the frozen confectionary tubes 2, the topping tubes 10, and/or the sauce tubes 11 to be dispensed. The serving station 17 may further comprise a frozen confectionary turntable 25 which can dispense one or more frozen confectionaries from the frozen confectionary tubes 2. The serving station 17 may further comprise a topping turntable 24 which can dispense one or more toppings from topping tubes 10. The serving station 17 may further comprise a sauce turntable 49 to dispense one or more sauces from the sauce tubes 11. Preferably the topping turntable 24 and/or the sauce turntable 49 are heated. For example, the topping turntable 24 and/or the sauce turntable 49 may comprise heated jackets for heating the topping tubes 10 and/or the sauce tubes 11. In an embodiment, the topping turntable 24 and/or sauce turntable 49 may comprise a heating coil and/or a heated plate.

In an embodiment, the topping turntable 24 may comprise an outlet valve (e.g., a star valve) to dispense a topping serving from the topping tubes 10. In an embodiment, the sauce turntable may comprise peristaltic pumps to dispense a sauce serving from the sauce tubes 11. The peristaltic pumps may be heated.

The dispensing machine 1 may further comprise an emptied tube storage area 39 for storing tubes that have lower than a pre-determined threshold amount of frozen confectionary and/or sauce and/or toppings. The arm 16 may move substantially emptied tubes to the emptied tube storage area 39.

The dispensing machine 1 may further comprise a spoon dispenser 18 configured to dispense spoons. For example, spoons may be placed in the container 8 or dispensed directly to the outlet 7. The dispensing machine 1 may further comprise a waste bin 19 to collect any unused containers 8 (e.g., wafers) and/or spoons.

In an embodiment, a cutter cleaning station 20 may be provided to clean the cutting device 5. For example, the cutting device 5 may be cleaned and sanitized by UV light.

### FIG. 14

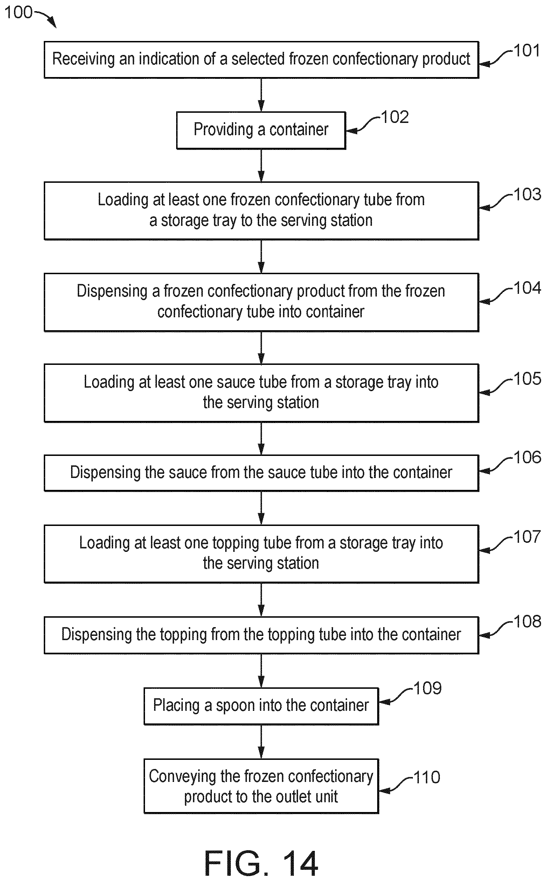

A non-limiting example of the method 100 is generally illustrated in **FIG. 14****.** Some embodiments of the method 100 can omit one or more of the steps depicted in **FIG. 14****,** and some embodiments of the method 100 can include one or more additional steps. The depicted steps are preferably performed in the order in which they are illustrated (as shown by arrows), but some embodiments can perform the steps in a different order. Indeed, the present disclosure is not limited to the specific embodiment shown in **FIG. 14****.**

The method 100 generally may comprise receiving an indication of a selected frozen confectionary product; providing a container; loading one or more first tubes comprising a composition that is a frozen confectionary or a component of a frozen confectionary from a first storage tray located in a first storage area to a serving station; dispensing at least a portion of the composition that is a frozen confectionary or a component of a frozen confectionary from at least one of the one or more first tubes into the container; optionally placing a spoon into the container; and conveying the frozen confectionary product to an outlet. A detailed explanation of the method 100 now follows.

The method 100 can comprise receiving an indication of a selected frozen confectionary product 28 (Step 101). For example, the indication may be received by the controller 27 which may be at least partially located in the rotating table 3. The indication may comprise an amount and a type of frozen confectionary, an amount and a type of sauce, and an amount and a type of topping to be included in the frozen confectionary product 28. The indication may be provided by the user input device 56. In an embodiment the indication may be provided automatically in response to a user input at a location remote from the dispensing machine 1 (e.g., from an application on a mobile phone).

In an embodiment, the method 100 can comprise providing the container 8 to hold the frozen confectionary product 28 (Step 102). Preferably the container 8 is made of edible materials. For example, the container 8 can be a wafer plate or a wafer cup. In an embodiment, providing the container 8 comprises the arm 16 picking up and placing the container 8 on the rotating table 3. For example, the arm 16 may pick up the container 8 from a container storage area 38 using the suction head 30 and place the container 8 on the rotating table 3 to be filled with the frozen confectionary and, optionally, one or more toppings and/or sauces. The arm 16 may be configured to provide the container 8 automatically in response to a signal from the controller 27. In this manner, no user input is required to provide the container 8.

In an embodiment, providing the container 8 may comprise using the distance measuring laser 40 to check the integrity of the container 8. The distance measuring laser may be at least partially located on the rotating table 3. If the container 8 is cracked or broken, the arm 16 may automatically dispose of the container 8 in the waste bin 19 and select a new container 8. For example, the distance measuring laser 40 may send a signal to the controller 27 which can direct the arm 16, without user input, to dispose of the container 8 if the container 8 is broken or cracked.

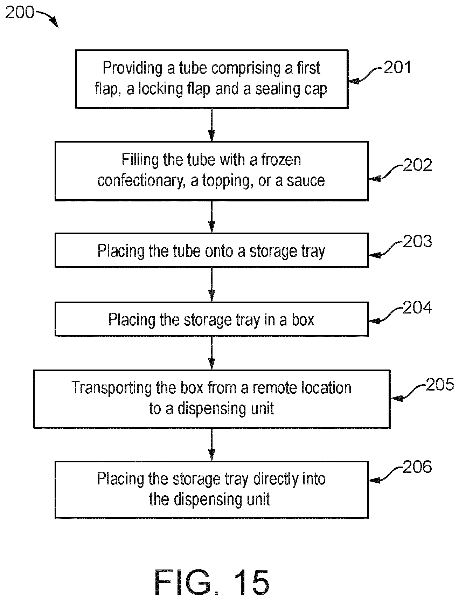

The method 100 can comprise loading at least one frozen confectionary tube 2 from a storage tray 95 located in the frozen confectionary storage area 29 to the serving station 17 (Step 103). Preferably the arm 16 may be used to load the frozen confectionary tube 2 from the frozen confectionary storage tray 95 into the serving station 17 (shown in Figure 15). For example, the arm 16 may be configured to rotate about 360° to remove the frozen confectionary tube 2 from the storage tray 95. The tube changer plate 33 preferably grips the frozen confectionary tube 2 and moves the frozen confectionary tube 2 to the serving station 17. The movable bar 33 of the arm 16 preferably moves up and down to rotate the frozen confectionary tube 2 into the proper position.

The method 100 can comprise dispensing a serving of the frozen confectionary into the container 8 (Step 104). In an embodiment, dispensing the serving of the frozen confectionary comprises positioning the container 8 under a first frozen confectionary tube 2 to receive a first frozen confectionary. Optionally the method 100 can comprise positioning the container 8 under a second frozen confectionary tube 2 to receive a second frozen confectionary additional or alternate to the first frozen confectionary. Optionally the method 100 can comprise positioning the container 8 under a third frozen confectionary tube 2 to receive a third frozen confectionary additional or alternative to the first frozen confectionary or the second frozen confectionary. It is contemplated any number of frozen confectionaries may be dispensed into the container 8. Preferably the frozen confectionary is disc shaped. However, additional shapes are contemplated such as a star, hexagon, square or polygon.

In a preferred embodiment, the arm 16 may be configured to load the frozen confectionary tubes 2 automatically without user input, most preferably by the controller 27 in direct response to the user input. For example, the controller 27 directs the arm 16 to load the frozen confectionary tubes 2 corresponding with the selected frozen confectionary product.

In an embodiment, dispensing the serving of the frozen confectionary comprises the servo drive 12 driving the jack screw 13 and/or the pusher plate 14 down a pre-determined distance dispense a serving of the frozen confectionary from the frozen confectionary tube 2. For example, a consumer may input a selected amount of a frozen confectionary into the user input device 56 and the controller 27 may be operable to control the servo drive 12, without user input, to dispense the selected amount of frozen confectionary from the frozen confectionary tube 2. In an embodiment, the cutting device 5 is used to cut the serving of frozen confectionary dispensed from the frozen confectionary tube 2. Preferably the controller 27 may be operable to control the cutting device 5 to cut the serving of frozen confectionary.

In an embodiment, after the frozen confectionary serving is dispensed from the frozen confectionary tube 2, the controller 27 may be operable to direct the arm 16 to return the frozen confectionary tube 2 containing any remaining frozen confectionary back to the frozen confectionary storage tray 95.

In an embodiment, the method 100 further comprises loading at least one sauce tube 11 from a storage tray 95 located in the sauce storage area 37 to the serving station 17 (Step 105). Optionally the arm 16 may transfer the sauce tubes 11 from the sauce storage area 37 to the serving station 17 and vice versa. Preferably the sauce tube 11 is placed on the sauce turntable 49 located in the serving station 17.

The method 100 may further comprise heating the sauce tube 11 prior to dispensing the sauce. For example, the sauce tube 11 may be heated in the serving station 17 by the sauce turntable 49. In such an embodiment, the sauce turntable 49 is heated. For example, the method 100 may comprise activating a heating plate located in the sauce turntable 49 to uniformly heat the sauce tube 11. In another example, the method may comprise using a heating coil located in the sauce turntable 49 to heat the sauce tube 11. In yet another example, the sauce tube 11 is placed in heated jackets located in the sauce turntable 49.

In an embodiment, the method 100 further comprises removing a sealing cap 83 from the sauce tube 11 to allow a serving of the sauce to be dispensed. For example, the sealing cap 83 can be removed at the sealing cap removal station 59. Optionally the sealing cap 83 may be pushed into the sauce tube 11 to allow dispensing of a serving of the sauce contained in the sauce tube 11.

In an embodiment, the method 100 comprises dispensing a serving of one or more sauces from one or more sauce tubes 11 into the container 8 (Step 106). Dispensing the serving of the sauce may comprise, for example, dispensing hot fudge into the container 8.

Preferably dispensing the serving of sauce comprises using the laser curtain 41 to detect the amount of sauce dispensed to ensure the correct amount of sauce is dispensed as determined by the controller 27. If the laser curtain 41 determines the correct amount of sauce has been dispensed, the container 8 may automatically proceed through the dispensing process without user input. If the laser curtain 41 determines not enough sauce has been dispensed, more sauce can automatically be dispensed. If the laser curtain 41 determines too much sauce has been dispensed, the container 8 may proceed through the dispensing process or the container 8 may be sent to the waste bin 19.

In an embodiment, the method 100 further comprises loading at least one topping tube 10 from a storage tray 95 located in the topping storage area 36 to the serving station 17 (Step 107). Optionally the arm 16 may transfer the topping tubes 10 from the topping storage area 36 to the serving station 17 and vice versa.

Optionally the method 100 further comprises dispensing a serving of one or more toppings from one or more topping tubes 10 into the container 8 (Step 108). Dispensing a serving of the topping may comprise, for example, dispensing nuts into the container 8.

In an embodiment, the laser curtain 41 may to determine if the correct amount of topping as determined by the controller 27 has been dispensed into the container 8. If the laser curtain 41 determines the correct amount of topping has been dispensed, the container 8 may automatically proceed through the dispensing process. If the laser curtain 41 determines not enough topping has been dispensed, more toppings will be dispensed. If the laser curtain 41 determines too much topping has been dispensed, the container 8 may proceed through the dispensing process or may be sent to the waste bin 19.

In an embodiment, the method 100 further comprises dispensing a spoon. For example, the method 100 may comprise placing a spoon into the container 8. In an embodiment, the spoon dispenser 18 may dispense the spoons. In an embodiment, the spoons are edible. In an embodiment, placing the spoon into the container 8 comprises using a gripper to pick up and place the spoon. In an embodiment, placing the spoon comprises placing the spoon into the container 8 prior to conveying the container 8 to the outlet 7. In an embodiment, placing the spoon comprises placing the spoon in the outlet 7 separately from the container 8.

In an embodiment, the frozen confectionary product 28 is provided to the outlet 7 (Step 108). In an embodiment, a consumer removes the frozen confectionary product from the outlet 7. Preferably the outlet 7 is visible to the consume

In an embodiment, the method 100 comprises transferring the frozen confectionary product 28 to a buffer unit 6 if the consumer has not removed the frozen confectionary product 28 from the outlet 7 in a pre-determined amount of time. In an embodiment, a consumer may pre-order a frozen confectionary product 28. In such an embodiment, a buffer unit 6 with an elevator stacker can be used to store the frozen confectionary product 28 for a pre-determined amount of time and provide the pre-ordered frozen confectionary product 28 to the outlet 7. Preferably the conveyor sling 55 may be configured to transfer the frozen confectionary product 28 to the buffer unit 6 to remove a frozen confectionary product 28 located in the outlet 7 that has not been removed by a consumer within a pre-determined time.

In a preferred embodiment, the conveyor sling 55 automatically transfers the frozen confectionary product 28 to the buffer unit 6 without user input after a pre-determined amount of time has passed. For example, the serving unit 50 may comprise a timer configured to measure the amount of time a frozen confectionary product 28 has been placed on the serving unit 50. Preferably, in response to a signal from the serving unit 50, the conveyor sling 55 may transfer the frozen confectionary product 28 to the buffer unit 6.

In an embodiment, the method 100 may comprise receiving the storage tray 95 comprising the frozen confectionary tubes 2, the topping tubes 10, and/or the sauce tubes 11 from a production facility. In such an embodiment, the service doors 9 may be configured to open and receive the storage tray 95. For example, the service doors 9 may comprise sliding skids configured to be pulled out to receive the storage tray 95. As a result, the frozen confectionary tubes 2, the topping tubes 10, and/or the sauce tubes 11 can advantageously be easily inserted and removed from the dispensing machine 1. In an embodiment, the service doors 9 may comprise alarms. Preferably the frozen confectionary tubes 2 are shipped in a refrigerated box from the production facility.

In an embodiment, the method 100 may comprise detecting if the amount of frozen confectionary, sauces, and/or toppings in the frozen confectionary tubes 2, the sauce tubes 11, and/or the topping tubes 10 is lower than a pre-determined threshold. For example, less than ten percent full. Preferably if the system detects the frozen confectionary tubes 2, the topping tubes 10, and/or the sauce tubes 11 are lower than a pre-determined threshold, the system will trigger an exchange for a replacement tube. In an embodiment, the detection system 43 may determine if the frozen confectionary tubes 2, the topping tubes 10, and/or the sauce tubes 11 are lower than a pre-determined threshold. If the frozen confectionary tubes 2, the topping tubes 10, and/or the sauce tubes 11 are lower than a pre-determined threshold, the dispensing machine 1 can automatically contact a production facility (e.g., through wireless communication) to order more frozen confectionary tubes 2, topping tubes 10, and/or sauce tubes 11 as will be discussed later in greater detail.

In an embodiment, the substantially emptied tubes are moved to an empty tube tray 39 located in the dispensing machine 1. Preferably the emptied tubes are then removed and transported to a remote location (e.g., the production facility or an intermediate location) to be cleaned and reused.

### FIG. 15

Another aspect of the present disclosure is a method 200 of supplying frozen confectionary and/or frozen confectionary components to a dispensing machine. A non-limiting example of the method 200 is generally illustrated in **FIG. 15****.** Some embodiments of the method 200 can omit one or more of the steps depicted in **FIG. 15****,** and some embodiments of the method 200 can include one or more additional steps. The depicted steps are preferably performed in the order in which they are illustrated (as shown by arrows), but some embodiments can perform the steps in a different order. Indeed, the present disclosure is not limited to the specific embodiment shown in **FIG. 15****.**

The method 200 preferably comprises providing a tube with a first flap, a locking flap and a sealing cap; filling at least a portion of the tube with a frozen confectionary, a sauce, or a topping; placing the tube onto a storage tray; transporting the storage tray containing the tubes to a dispensing machine 1; and placing the storage tray directly into the dispensing machine 1 without removing the tubes from the storage tray or removing the contents from the tubes. A detailed description of the method 200 now follows.

In an embodiment, the tube may be a frozen confectionary tube 2, a topping tube 10 and/or a sauce tube 11.

In an embodiment, the method 200 comprises providing a tube comprising a first flap 71 to avoid slipping during the movement of the tube (Step 101). In an embodiment, the method 200 may comprise providing a tube comprising one or more locking flaps 82 configured to lock the frozen confectionary tube 2 into the transport tray 95. In an embodiment, the method 200 comprises providing a tube with at least one sealing cap 83. In an embodiment, the method 200 comprises providing a tube with a sliding gate 91.

In an embodiment, the method 200 comprises filling the tube with a frozen confectionary, sauce, and/or topping (Step 202). The tube may be filled at a production facility.

In an embodiment, the method 200 comprises placing the tubes on a storage tray 95 (Step 203). Placing the tubes on the storage tray 95 may comprise using the one or more locking flaps 82 to lock the tubes onto the storage tray 95.

In an embodiment, the method 200 comprises placing the storage tray 95 in a box (Step 204). In an embodiment, the box may be a refrigerated box.

In an embodiment, the method 200 may comprise transporting the box from a remote location to the dispensing machine 1 (Step 205).

In an embodiment, the method 200 may comprise placing the storage tray 95 directly into the dispensing machine 1 without removing the tubes from the storage tray 95. In such an embodiment, the service doors 9 may be configured to open and receive the storage tray 95. For example, the service doors 9 may comprise sliding skids configured to be pulled out to receive the storage tray 95. As a result, the tubes can advantageously be easily inserted and removed from the dispensing machine 1.

In an embodiment, the method 200 further comprises cleaning the tubes prior to providing the tubes to be filled with a frozen confectionary, sauce, and/or topping. The cleaning may be performed at a different location than the dispensing machine 1. Preferably cleaning the tubes comprises cleaning the tubes with hot water and sanitizing the tubes. For example, water at a temperature of about 90°C can be used.

As a non-limiting example, the cleaning can comprise ultra-sonic cleaning such as a pH 12 ultra-sonic bath (e.g., at a pH of about 12.0); and the tubes can comprise or consist of materials that can withstand such washing. However, the present disclosure is not limited to a specific embodiment of the cleaning, and the cleaning can be any means known in the art that reduces the residual material on the tubes.

A method for real-time ordering and inventory management of the dispensing machine 1 is also disclosed. The method comprises detecting if one or more tubes have an amount of content lower than a pre-determined threshold and automatically ordering replacement tubes from a remote location and/or automatically producing a frozen confectionary product or component thereof. In a preferred embodiment, the remote location is a production facility.

For example, the dispensing machine 1 may be in in direct communication with the production facility (e.g., a wireless communication connection). When the contents of the frozen confectionary tubes 2, the sauce tubes 11, and/or topping tubes 10 are lower than a pre-determined threshold, the dispensing machine 1 can alert the production facility that more tubes are needed and/or the tubes are automatically shipped from the production facility to the dispensing machine 1. Preferably the replacement tubes are shipped automatically after receiving an indication from the dispensing machine 1 with minimum or no user input.

In an embodiment, the method for real-time ordering and inventory management further comprises receiving an indication at a location remote from the dispensing machine the production facility that the empty tube tray 39 is full. In such an embodiment, the dispensing machine 1 can alert the remote location that the empty tube tray 39 is full and the remote location automatically arranges for removal of the empty tube tray 39 from the dispensing machine 1. In a preferred embodiment, the remote location is a production facility. The empty tube tray 39 may then be shipped to the remote location which can clean and optionally reuse the tubes located on the empty tube tray 39.

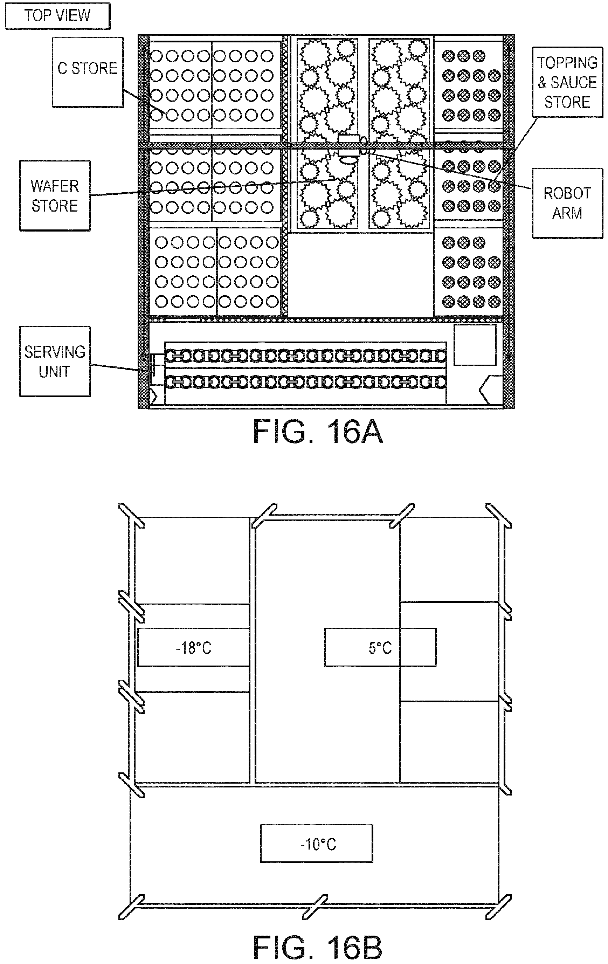

As noted above, some embodiments of the methods 100 and 200 can omit one or more of the steps depicted in the figures, and some embodiments of the methods 100 and 200 can include one or more additional steps. The depicted steps are preferably performed in the order in which they are illustrated (as shown by arrows), but some embodiments can perform the steps in a different order. Indeed, the present disclosure is not limited to the specific embodiments shown in **FIGS. 15** and **16****.**

### FIG. 16 A; FIG. 16 B

FIG. 16A is a top view of a dispensing machine according to the invention. It shows an alternative layout of the positions of the first storage area, the second storage and the serving station. FIG. 16B is a top view of a dispensing machine according to the invention with temperature zones indicated. The layout shows that the first storage area is positioned in the first zone which has a temperature of -18°C, the serving station is positioned in a second zone which has a temperature of -10°C, and the second storage area is positioned in a third zone, the temperature of the third zone is ambient e.g. 6 °C.

## Claims

1. A dispensing machine 1 for dispensing a frozen confectionary product 28, the machine 1 comprising:
a first storage area 39 for storing a first storage tray 95 with one or more first tubes in the dispensing machine 1,
a serving station 17 for receiving one or more first tubes comprising a composition that is a frozen confectionary from the first storage tray 95, the serving station 17 comprises
a first position under the one or more first tubes for receiving a container 8, a means for extruding the frozen confectionary out of the tubes located in the serving station 17,
a cutting device 5 for cutting at least a portion of the frozen confectionary into the container 8,
means for transferring the one or more first tubes in the first storage area 39 to the serving station 17 and from the serving station 17 to a storage area 39, and wherein the one or more first tubes are reusable; and
at least two zones, the at least two zones comprising a first zone wherein the temperature is lower than the temperature in the second zone, and wherein the first storage area 39 is located in the first zone and the serving station 17 is located in the second zone;
wherein
the means for transferring the one or more first tubes is a robotic arm 16, preferably a robotic arm 16 comprising a tube changer plate 33 configured to grip the one or more first tubes.

2. A dispensing machine 1 according to claim 1, wherein the machine 1 comprises a second storage area 39 separate from the first storage area 39 for storing a second storage tray 95 comprising one or more second tubes comprising an additional component,
means for transferring the one or more second tubes from the second storage area 39 to the serving station 17, and wherein the serving station 17 comprises a second position under the one or more of the second tubes for receiving a container 8.

3. A dispensing machine 1 according to claims 1 and 2, wherein the machine 1 comprises a third zone wherein the second storage area 39 is positioned, and wherein the temperature of the third zone is higher than the temperature of the first zone.

4. A dispensing machine 1 according to any of the claims, wherein the temperature of the first zone is -20 - -16°C, the temperature of the second zone is -10 - -6°C, and the temperature of the third zone is 6 - 8°C.

5. A dispensing machine 1 according to any of the preceding claims, wherein the machine 1 comprises means for conveying the frozen confectionary product 28 to an outlet 7 on the dispensing machine 1.

6. A dispensing machine 1 according to any of the preceding claims, wherein the machine 1 comprises heaters for heating the one or more second tubes in the serving station 17 prior to dispensing the portion of the component of the frozen confectionary into the container 8.

7. A dispensing machine 1 according to any of the preceding claims, wherein the machine 1 comprises means for detecting when contents of one of the one or more first tubes is below a pre-determined threshold, and means for moving the one of the one or more first tubes having contents below the pre-determined threshold into an empty tube location in a tray 95 located in the dispensing machine 1.

8. A dispensing machine 1 according to any of the preceding claims, wherein the dispensing machine 1 comprise a user interface 56 for receiving an indication of a type of frozen confectionary product 28 to be dispensed.

9. A dispensing machine 1 according to any of the preceding claims, wherein the tube comprises a first flap 81 located on a first end of the tube, a second locking flap 82 located on a second end of the tube.

10. A dispensing machine 1 according to any of the preceding claims, wherein the tube comprises a sealing cap 83, preferably a sealing cap 83 configured to be pushed into the tube.

11. A dispensing machine 1 according to any of the preceding claims, wherein the machine 1 comprises a door for receiving and removing trays 95 with tubes.

12. A dispensing machine 1 according to any of the preceding claims, wherein the machines 1 comprises a buffer unit 6 located in the dispensing machine 1 prior to conveying the frozen confectionary product 28 to the outlet 7.

13. A dispensing machine 1 according to any of the preceding claims, wherein the machine 1 comprises a rotating table 3 located in the dispensing machine 1.

14. A dispensing machine 1 according to any of the preceding claims, wherein the tubes have an inner profile having a shape selected from the group consisting of a disc, a star, a hexagon, a square or a polygon.

## Patentansprüche

1. Ausgabemaschine 1 zum Ausgeben eines gefrorenen Süßwarenprodukts 28, die Maschine 1 umfassend:
einen ersten Lagerbereich 39 zum Lagern einer ersten Lagerschale 95 mit einem oder mehreren ersten Rohren in der Ausgabemaschine 1,
eine Servierstation 17 zum Empfangen einer oder mehrerer erster Rohre, umfassend eine Zusammensetzung, die eine gefrorene Süßware ist, von der ersten Lagerschale 95, wobei die Servierstation 17 umfasst
eine erste Position unter dem einen oder den mehreren ersten Rohren zum Empfangen eines Behälters 8,
ein Mittel zum Ausstoßen der gefrorenen Süßware aus den Rohren heraus, das sich in der Servierstation 17 befindet,
eine Schneidvorrichtung 5 zum Schneiden mindestens einer Portion der gefrorenen Süßware in den Behälter 8,
Mittel zum Übertragen des einen oder der mehreren ersten Rohre in dem ersten Lagerbereich 39 zu der Servierstation 17 und von der Servierstation 17 zu einem Lagerbereich 39, und wobei das eine oder die mehreren ersten Rohre wiederverwendbar sind; und
mindestens zwei Zonen, die mindestens zwei Zonen umfassend eine erste Zone, wobei die Temperatur niedriger als die Temperatur in der zweiten Zone ist, und wobei sich der erste Lagerbereich 39 in der ersten Zone befindet und sich die Servierstation 17 in der zweiten Zone befindet;
wobei
das Mittel zum Übertragen des einen oder der mehreren ersten Rohre ein Roboterarm 16 ist, vorzugsweise ein Roboterarm 16, umfassend eine Rohrwechslerplatte 33, die konfiguriert ist, um das eine oder die mehreren ersten Rohre zu greifen.

2. Ausgabemaschine 1 nach Anspruch 1, wobei die Maschine 1 einen zweiten Lagerbereich 39 umfasst, der von dem ersten Lagerbereich 39 getrennt ist, zum Lagern einer zweiten Lagerschale 95, umfassend ein oder mehrere zweite Rohre, umfassend eine zusätzliche Komponente,
Mittel zum Übertragen des einen oder der mehreren zweiten Rohre von dem zweiten Lagerbereich 39 zu der Servierstation 17, und wobei die Servierstation 17 eine zweite Position unter dem einen oder den mehreren der zweiten Rohren zum Empfangen eines Behälters 8 umfasst.

3. Ausgabemaschine 1 nach den Ansprüchen 1 und 2, wobei die Maschine 1 eine dritte Zone umfasst, in der der zweite Lagerbereich 39 positioniert ist, und wobei die Temperatur der dritten Zone höher als die Temperatur der ersten Zone ist.

4. Ausgabemaschine 1 nach einem der Ansprüche, wobei die Temperatur der ersten Zone -20 bis -16 °C beträgt, die Temperatur der zweiten Zone -10 bis -6 °C beträgt und die Temperatur der dritten Zone 6 bis 8 °C beträgt.

5. Ausgabemaschine 1 nach einem der vorstehenden Ansprüche, wobei die Maschine 1 Mittel zum Befördern des gefrorenen Süßwarenprodukts 28 zu einem Auslass 7 an der Ausgabemaschine 1 umfasst.

6. Ausgabemaschine 1 nach einem der vorstehenden Ansprüche, wobei die Maschine 1 Heizer zum Erhitzen des einen oder der mehreren zweiten Rohre in der Servierstation 17 vor dem Ausgeben der Portion der Komponente der gefrorenen Süßware in den Behälter 8 umfasst.

7. Ausgabemaschine 1 nach einem der vorstehenden Ansprüche, wobei die Maschine 1 Mittel zum Erkennen, wenn Inhalte eines des einen oder der mehreren ersten Rohre unter einem zuvor bestimmten Schwellenwert liegen, und Mittel zum Bewegen des einen des einen oder der mehreren ersten Rohre, das Inhalte unter dem zuvor bestimmten Schwellenwert aufweist, in einen leeren Rohrplatz in einer Schale 95, die sich in dem Ausgabemaschine 1 befindet, umfasst.

8. Ausgabemaschine 1 nach einem der vorstehenden Ansprüche, wobei die Ausgabemaschine 1 eine Benutzerschnittstelle 56 zum Empfangen einer Anzeige einer Art von gefrorenem Süßwarenprodukt 28 umfasst, das ausgegeben werden soll.

9. Ausgabemaschine 1 nach einem der vorstehenden Ansprüche wobei das Rohr eine erste Klappe 81, die sich an einem ersten Ende des Rohrs befindet, und eine zweite Verschlussklappe 82 umfasst, die sich an einem zweiten Ende des Rohrs befindet.

10. Ausgabemaschine 1 nach einem der vorstehenden Ansprüche, wobei das Rohr eine Abdichtkappe 83 umfasst, vorzugsweise eine Abdichtkappe 83, die konfiguriert ist, um in das Rohr hineingeschoben zu werden.

11. Ausgabemaschine 1 nach einem der vorstehenden Ansprüche, wobei die Maschine 1 eine Tür zum Empfangen und Entfernen von Schalen 95 mit Rohren umfasst.

12. Ausgabemaschine 1 nach einem der vorstehenden Ansprüche, wobei die Maschine 1 eine Puffereinheit 6 umfasst, die sich in der Ausgabemaschine 1 befindet, bevor das gefrorene Süßwarenprodukt 28 zu dem Auslass 7 befördert wird.

13. Ausgabemaschine 1 nach einem der vorstehenden Ansprüche, wobei die Maschine 1 einen Drehtisch 3 umfasst, der sich in der Ausgabemaschine 1 befindet.

14. Ausgabemaschine 1 nach einem der vorstehenden Ansprüche, wobei die Rohre ein Innenprofil aufweisen, das eine Form aufweist, die aus der Gruppe ausgewählt ist, bestehend aus einer Scheibe, einem Stern, einem Hexagon, einem Quadrat oder einem Polygon.

## Revendications

1. Machine de distribution 1 permettant de distribuer un produit de confiserie congelé 28, la machine 1 comprenant :
une première région de stockage 39 pour stocker un premier plateau de stockage 95 avec un ou plusieurs premiers tubes dans la machine de distribution 1,
un poste de service 17 pour recevoir un ou plusieurs premiers tubes comprenant une composition qui est une confiserie congelée depuis le premier plateau de stockage 95, le poste de service 17 comprend
une première position sous les un ou plusieurs premiers tubes pour recevoir un récipient 8,
un moyen d'extrusion de la confiserie congelée hors des tubes situés dans le poste de service 17,
un dispositif de découpe 5 pour découper au moins une portion de la confiserie congelée dans le récipient 8,
un moyen pour transférer les un ou plusieurs premiers tubes dans la première région de stockage 39 vers le poste de service 17 et du poste de service 17 vers une région de stockage 39, et dans lequel les un ou plusieurs premiers tubes sont réutilisables ; et
au moins deux zones, les au moins deux zones comprenant une première zone dans laquelle la température est inférieure à la température dans la deuxième zone, et dans laquelle la première zone de stockage 39 est située dans la première zone et le poste de service 17 est situé dans la deuxième zone ;
dans laquelle
le moyen de transfert des un ou plusieurs premiers tubes est un bras robotique 16, de préférence un bras robotique 16 comprenant une plaque de changeur de tubes 33 conçue pour saisir les un ou plusieurs premiers tubes.

2. Machine de distribution 1 selon la revendication 1, dans laquelle la machine 1 comprend une deuxième zone de stockage 39 séparée de la première zone de stockage 39 pour le stockage d'un second plateau de stockage 95 comprenant un ou plusieurs seconds tubes comprenant un composant supplémentaire,
un moyen pour transférer les un ou plusieurs seconds tubes de la deuxième zone de stockage 39 au poste de service 17, et dans laquelle le poste de service 17 comprend une seconde position sous les un ou plusieurs des seconds tubes pour recevoir un récipient 8.

3. Machine de distribution 1 selon les revendications 1 et 2, dans laquelle la machine 1 comprend une troisième zone dans laquelle la deuxième zone de stockage 39 est positionnée, et dans laquelle la température de la troisième zone est supérieure à la température de la première zone.

4. Machine de distribution 1 selon l'une quelconque des revendications, dans laquelle la température de la première zone est de -20 à -16 °C, la température de la deuxième zone est de -10 à -6 °C, et la température de la troisième zone est de 6 à 8 °C.

5. Machine de distribution 1 selon l'une quelconque des revendications précédentes, dans laquelle la machine 1 comprend un moyen pour acheminer le produit de confiserie congelé 28 vers une sortie 7 de la machine de distribution 1.

6. Machine de distribution 1 selon l'une quelconque des revendications précédentes, dans laquelle la machine 1 comprend des éléments chauffants pour chauffer les un ou plusieurs seconds tubes dans le poste de service 17 avant de distribuer la portion du composant de la confiserie congelée dans le récipient 8.

7. Machine de distribution 1 selon l'une quelconque des revendications précédentes, dans laquelle la machine 1 comprend un moyen pour détecter lorsque le contenu d'un parmi le ou les premiers tubes est inférieur à un seuil prédéterminé, et un moyen pour déplacer l'un parmi le ou les premiers tubes ayant un contenu inférieur au seuil prédéterminé dans un emplacement de tube vide dans un plateau 95 situé dans la machine de distribution 1.

8. Machine de distribution 1 selon l'une quelconque des revendications précédentes, dans laquelle la machine de distribution 1 comprend une interface utilisateur 56 pour recevoir une indication d'un type de produit de confiserie congelé 28 à distribuer.

9. Machine de distribution 1 selon l'une quelconque des revendications précédentes, dans laquelle le tube comprend un premier volet 81 situé sur une première extrémité du tube, un second volet de verrouillage 82 situé sur une seconde extrémité du tube.

10. Machine de distribution 1 selon l'une quelconque des revendications précédentes, dans laquelle le tube comprend un capuchon d'étanchéité 83, de préférence un capuchon d'étanchéité 83 conçu pour être poussé dans le tube.

11. Machine de distribution 1 selon l'une quelconque des revendications précédentes, dans laquelle la machine 1 comprend une porte pour recevoir et retirer les plateaux 95 avec les tubes.

12. Machine de distribution 1 selon l'une quelconque des revendications précédentes, dans laquelle la machine 1 comprend une unité tampon 6 située dans la machine de distribution 1 avant l'acheminement du produit de confiserie congelé 28 vers la sortie 7.

13. Machine de distribution 1 selon l'une quelconque des revendications précédentes, dans laquelle la machine 1 comprend une table rotative 3 située dans la machine de distribution 1.

14. Machine de distribution 1 selon l'une quelconque des revendications précédentes, dans laquelle les tubes ont un profil interne ayant une forme choisie dans le groupe constitué d'un disque, d'une étoile, d'un hexagone, d'un carré ou d'un polygone.
